# EUROPEAN PATENT APPLICATION

(11) **EP 4 749 432 A1**
(43) Date of publication of application: **27.05.2026**
(21) Application number: 24863059.2
(22) Date of filing: 12.08.2024
(51) Int. Cl.: G06F 8/33, G06F 8/30, G06N 3/0475, G06N 3/092

(54) **ELECTRONIC DEVICE AND CONTROL METHOD THEREOF**

(30) Priority: 07.09.2023 KR 20230119295
(71) Applicant: Samsung Electronics Co., Ltd., Suwon-si, Gyeonggi-do 16677 (KR)
(72) Inventor: RYU, Heechang, Suwon-si Gyeonggi-do 16677 (KR); CHOI, Byunguk, Suwon-si Gyeonggi-do 16677 (KR); LEE, Kangwook, Suwon-si Gyeonggi-do 16677 (KR)
(74) Representative: Gulde & Partner
(86) International application number: PCT/KR2024/012011
(87) International publication number: WO 2025/053477

(57) **Abstract**

An electronic device comprising a code generation model comprises: a memory that stores at least one instruction; and at least one processor connected to the memory to control the electronic device, wherein the at least one processor: acquires a user command for training the code generation model; acquires a source code corresponding to a code learning model; partitions the source code into preset units to acquire a first code block and a second code block; acquires first error message information including at least one detailed error message related to the first code block and second error message information including at least one detailed error message related to the second code block; acquires a first check score corresponding to the first error message information and a second check score corresponding to the second error message information; determines a sampling block from among the first code block and the second code block on the basis of the first check score and the second check score; and trains the code generation model by using the sampling block.

## Description

### [Technical Field]

The present disclosure relates to an electronic apparatus and a control method thereof, and more particularly, to an electronic apparatus for generating code based on a user command and a control method thereof.

### [Background Art]

A code generation model may generate code in a predetermined computer language based on a user command. The code generation model may automatically generate code requested by a user by using a computer language designated by the user or a predetermined computer language.

The code generation model may be implemented as an artificial intelligence model, and a final code generation model may be determined through a training process. In the training process of the artificial intelligence model, training data may be required.

As the quality of the training data is higher, the accuracy of the artificial intelligence model to be trained may be higher. To train the code generation model, code data including no error is required to be used, whereas it is difficult to collect various code data including no error.

To generate standardized code, the training data is required to be standardized, whereas it is difficult to standardize various code data.

### [Disclosure of Invention]

### [Solution to Problem]

The present disclosure provides an electronic apparatus using preprocessed training data in a training process of a code generation model and a control method thereof.

According to an embodiment of the present disclosure, provided is an electronic apparatus including a code generation model, the apparatus including: a memory that stores at least one instruction; and at least one processor connected to the memory and configured to control the electronic apparatus, wherein the at least one processor is configured to: acquire a user command for training the code generation model; acquire source code corresponding to the code training command; acquire a first code block and a second code block by partitioning the source code into predetermined units; acquire first error message information including at least one detailed error message related to the first code block and second error message information including at least one detailed error message related to the second code block; acquire a first inspection score corresponding to the first error message information and a second inspection score corresponding to the second error message information; determine a sampling block from among the first code block and the second code block on the basis of the first inspection score and the second inspection score; and train the code generation model by using the sampling block.

The at least one processor may be configured to: acquire the first code block and the second code block by cumulatively applying the predetermined unit to the source code, the first code block having a smaller size than the second code block.

The predetermined unit may be a function unit declared in the source code.

The at least one processor may be configured to: identify a message type of each of at least one detailed error message included in the first error message information and the second error message information; and acquire the first inspection score and the second inspection score based on reference scores corresponding to the identified message types.

The at least one processor may be configured to: identify a message type of each of at least one detailed error message included in the first error message information and the second error message information; and acquire the first inspection score and the second inspection score based on ratio information for each message type and weight information for each message type.

The at least one processor may be configured to: determine, as the sampling block, a code block corresponding to an inspection score equal to or greater than a threshold value among the first inspection score and the second inspection score.

The at least one processor may be configured to: acquire a first number of tokens corresponding to the first code block; acquire a second number of tokens corresponding to the second code block; determine the first code block and the second code block as the sampling block when the first number of tokens is less than a threshold number and the second number of tokens is less than the threshold number; and determine the first code block as the sampling block when the first number of tokens is less than the threshold number and the second number of tokens is not less than the threshold number.

The at least one processor may be configured to: acquire preprocessed code information including the sampling block; and acquire result code information by inputting the preprocessed code information into the code generation model as input data.

The predetermined unit may be a first unit, and the at least one processor may be configured to: acquire a third code block and a fourth code block by cumulatively applying a second unit to the result code information; acquire a third inspection score corresponding to the third code block and a fourth inspection score corresponding to the fourth code block; and acquire an average inspection score of the third inspection score and the fourth inspection score.

The at least one processor may be configured to: change parameters of the code generation model by performing a reinforcement learning function based on the average inspection score; and update the code generation model based on the changed parameters.

According to an embodiment of the present disclosure, provided is a control method of an electronic apparatus including a code generation model, the method including: acquiring a user command for training the code generation model; acquiring source code corresponding to the code training command; acquiring a first code block and a second code block by partitioning the source code into predetermined units; acquiring first error message information including at least one detailed error message related to the first code block and second error message information including at least one detailed error message related to the second code block; acquiring a first inspection score corresponding to the first error message information and a second inspection score corresponding to the second error message information; determining a sampling block from among the first code block and the second code block on the basis of the first inspection score and the second inspection score; and training the code generation model by using the sampling block.

The acquiring of the first code block and the second code block may include: acquiring the first code block and the second code block by cumulatively applying the predetermined unit to the source code, the first code block having a smaller size than the second code block.

The predetermined unit may be a function unit declared in the source code.

The acquiring of the first inspection score and the second inspection score may include: identifying a message type of each of at least one detailed error message included in the first error message information and the second error message information; and acquiring the first inspection score and the second inspection score based on reference scores corresponding to the identified message types.

The acquiring of the first inspection score and the second inspection score may include: identifying a message type of each of at least one detailed error message included in the first error message information and the second error message information; and acquiring the first inspection score and the second inspection score based on ratio information for each message type and weight information for each message type.

The determining of the sampling block may include: determining, as the sampling block, a code block corresponding to an inspection score equal to or greater than a threshold value among the first inspection score and the second inspection score.

The determining of the sampling block may include: acquiring a first number of tokens corresponding to the first code block; acquiring a second number of tokens corresponding to the second code block; determining the first code block and the second code block as the sampling block when the first number of tokens is less than a threshold number and the second number of tokens is less than the threshold number; and determining the first code block as the sampling block when the first number of tokens is less than the threshold number and the second number of tokens is not less than the threshold number.

The training of the code generation model may include: acquiring preprocessed code information including the sampling block; and acquiring result code information by inputting the preprocessed code information into the code generation model as input data.

The predetermined unit may be a first unit, and the training of the code generation model may include: acquiring a third code block and a fourth code block by cumulatively applying a second unit to the result code information; acquiring a third inspection score corresponding to the third code block and a fourth inspection score corresponding to the fourth code block; and acquiring an average inspection score of the third inspection score and the fourth inspection score.

The training of the code generation model may include: changing parameters of the code generation model by performing a reinforcement learning function based on the average inspection score; and updating the code generation model based on the changed parameters.

### [Brief Description of Drawings]

FIG. 1 is a diagram illustrating a code generation model according to an embodiment.
FIG. 2 is a block diagram illustrating an electronic apparatus according to an embodiment.
FIG. 3 is a diagram illustrating an operation of training the code generation model according to an embodiment.
FIG. 4 is a diagram illustrating an operation of preprocessing training data according to an embodiment.
FIG. 5 is a diagram illustrating an operation of acquiring an inspection score according to an embodiment.
FIG. 6 is a diagram illustrating an operation of acquiring a code block according to an embodiment.
FIG. 7 is a diagram illustrating an operation of calculating an inspection score for each code block according to an embodiment.
FIG. 8 is a diagram illustrating an operation of calculating an inspection score for each code block according to an embodiment.
FIG. 9 is a diagram illustrating a table indicating scores corresponding to message types according to an embodiment.
FIG. 10 is a diagram illustrating an operation of calculating an inspection score based on scores corresponding to message types according to an embodiment.
FIG. 11 is a diagram illustrating an operation of acquiring an inspection score based on ratio information according to an embodiment.
FIG. 12 is a diagram illustrating an operation of acquiring an inspection score based on ratio information according to an embodiment.
FIG. 13 is a diagram illustrating a sampling operation based on an inspection score according to an embodiment.
FIG. 14 is a diagram illustrating a sampling operation based on the number of tokens according to an embodiment.
FIG. 15 is a diagram illustrating an operation of training the code generation model according to an embodiment.
FIG. 16 is a diagram illustrating an error message according to an embodiment.
FIG. 17 is a diagram illustrating result code information according to an embodiment.
FIG. 18 is a diagram illustrating an operation of acquiring result code information based on a prompt according to an embodiment.
FIG. 19 is a diagram illustrating an operation of setting code blocks for each line according to an embodiment.
FIG. 20 is a diagram illustrating a control method of an electronic apparatus according to an embodiment.

### [Mode for Invention]

Hereinafter, the present disclosure is described in detail with reference to the accompanying drawings.

General terms currently widely used are selected as terms used in the embodiments of the present disclosure in consideration of their functions in the present disclosure, and may be changed based on the intentions of those skilled in the art or a judicial precedent, the emergence of a new technique, or the like. In addition, in a specific case, terms arbitrarily selected by an applicant may be present. In this case, the meanings of such terms are mentioned in detail in corresponding descriptions of the present disclosure. Therefore, the terms used in the present disclosure need to be defined on the basis of the meanings of the terms and the contents throughout the present disclosure rather than simple names of the terms.

In the specification, the expression such as "have," "may have," "include," or "may include," indicates the presence of a corresponding feature (for example, a numerical value, a function, an operation, or a component such as a part), and does not exclude the presence of an additional feature.

An expression such as "at least one of A or/and B" may indicate either "A or B," or "both of A and B."

Expressions such as "first" and "second," used in the present disclosure may indicate various components regardless of the sequence or importance of the components. The expression is used only to distinguish one component from another component, and does not limit the corresponding component.

When any component (e.g., a first component) is mentioned to be "(operatively or communicatively) coupled with/to" or "connected to" another component (e.g., a second component), it should be understood that the any component is directly coupled to another component or may be coupled to another component through yet another component (e.g., a third component).

A term of a singular number may include its plural number unless explicitly indicated otherwise in the context. It should be understood that in this application, terms such as "include" or "have" indicate that the presence of the features, numbers, steps, operations, components, parts, or combinations thereof, which are described in the specification, and do not preclude the presence or addition of at least one other features, numbers, steps, operations, components, parts, or combinations thereof.

In the present disclosure, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor (not shown) except for a "module" or a "part" that needs to be implemented by specific hardware.

In the specification, a term such as a "user" may refer to a person who uses an electronic apparatus or an apparatus (e.g., an artificial intelligence electronic apparatus) which uses an electronic apparatus.

Hereinafter, embodiments of the present disclosure are described in more detail with reference to the accompanying drawings.

In the present disclosure, an artificial intelligence model to be trained may indicate that a basic artificial intelligence model (e.g., an artificial intelligence model including random parameters) is trained using a plurality of training data based on a training algorithm, thereby generating predefined operation rules or an artificial intelligence model set to perform desired characteristics (or purposes). Such training may be performed through a separate server and/or system, is not limited thereto, and may also be performed by an electronic apparatus 100. Examples of training algorithms may include supervised learning, unsupervised learning, semi-supervised learning, transfer learning, or reinforcement learning, and are not limited to the foregoing examples.

Here, each artificial intelligence model may be implemented as, for example, a convolutional neural network (CNN), a recurrent neural network (RNN), a restricted Boltzmann machine (RBM), a deep belief network (DBN), a bidirectional recurrent deep neural network (BRDNN), or a deep Q-network, and is not limited thereto.

At least one processor 120 for executing an artificial intelligence model according to an embodiment of the present disclosure may be implemented through a combination of a processor and software, the processor including a general-purpose processor such as a central processor (CPU), an application processor (AP) or a digital signal processor (DSP), a graphics-only processor such as a graphics processing unit (GPU) or a vision processing unit (VPU), or a neural network dedicated processor such as a neural processing unit (NPU). At least one processor 120 may control processing of input data according to predefined operation rules or an artificial intelligence model stored in a memory 110. Alternatively, when at least one processor 120 is implemented as a dedicated processor (or an artificial intelligence-dedicated processor), at least one processor 120 may be designed to have a hardware structure specialized for processing a specific artificial intelligence model. For example, hardware specialized for processing a specific artificial intelligence model may be designed as a hardware chip such as an application-specific integrated circuit (ASIC) or a field programmable gate array (FPGA). When at least one processor 120 is implemented as a dedicated processor, at least one processor 120 may be implemented to include a memory for implementing embodiments of the present disclosure, or implemented to include a memory processing a function for using an external memory.

In another example, the memory 110 may store information related to an artificial intelligence model including a plurality of layers. Here, storing information related to the artificial intelligence model may indicate storing various information related to operations of the artificial intelligence model, for example, information about the plurality of layers included in the artificial intelligence model, information about parameters used in each of the plurality of layers (e.g., filter coefficients or biases), and the like.

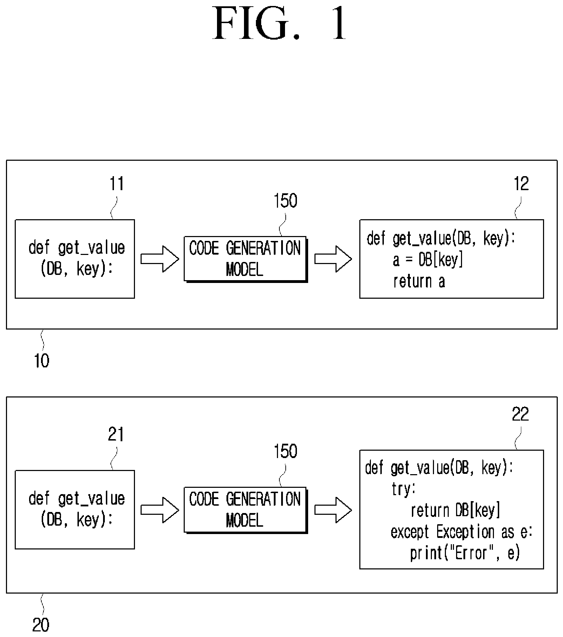

FIG. 1 is a diagram illustrating a code generation model according to an embodiment.

The electronic apparatus 100 may include a code generation model 150. The code generation model 150 may include a model that generates supplemented code based on input data. The code generation model 150 may include a model that analyzes code information included in the input data to generate code including no error. The code generation model 150 may include a model that generates code implementing the input data.

The code generation model 150 may include an artificial intelligence model that generates code. The code generation model 150 may include a model that generates the code information using a programming language based on information included in the input data.

For example, the programming language may include one of Python, JavaScript, Java, C++, or C#.

For example, the code generation model 150 may generate the code information by using a programming language included in the input data. A user may determine which programming language is to be used to generate the code information. For example, it is assumed that at least one processor 120 receives, as the input data, a user input indicating "generate code for performing four arithmetic operations in Python." At least one processor 120 may identify whether a programming language is included in the input data. At least one processor 120 may identify the programming language from the input data, and generate the code information by using the identified programming language.

For example, the code generation model 150 may generate the code information in a predetermined language. The predetermined language may be a language set by a user. The code generation model 150 may have a unique programming language set thereto. The code generation model 150 may generate the code information corresponding to the input data by using the predetermined language. The predetermined language may be changed according to a user setting. Predetermined languages may differ for each of the code generation models 150. For example, a first code generation model may be a model using a first language, and a second code generation model may be a model using a second language.

Referring to Embodiment 10 of FIG. 1, it is assumed that the code generation model 150 is a model trained without using standardized training data. The electronic apparatus 100 may input input data 11 into the code generation model 150. The code generation model 150 may acquire output data 12 corresponding to the input data 11. The input data 11 may include incomplete code for acquiring a key value from a database DB. The output data 12 may include complete code (or supplemented code) for acquiring the key value from the database DB.

Referring to Embodiment 10 of FIG. 1, it is assumed that the code generation model 150 is a model trained by using standardized training data. The electronic apparatus 100 may input input data 21 into the code generation model 150. The code generation model 150 may acquire output data 22 corresponding to the input data 21. The input data 21 may include incomplete code for acquiring a key value from the database DB. The output data 22 may include complete code (or supplemented code) for acquiring the key value from the database DB.

The output data 22 may include code ("except Exception as e:", "print("Error", e)") that is not included in the output data 12. When the standardized training data is used, a possibility of generating supplemented code that causes a minimal number of errors may increase.

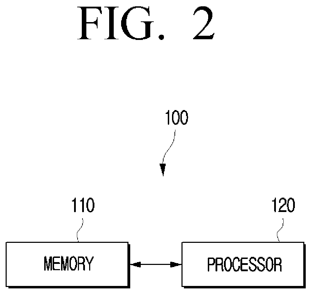

FIG. 2 is a block diagram illustrating an electronic apparatus according to an embodiment.

Referring to FIG. 2, the electronic apparatus 100 may include the memory 110 and at least one processor 120.

The memory 110 may be implemented as an internal memory such as a read-only memory (ROM) (e.g., an electrically erasable programmable read-only memory (EEPROM)) or a random access memory (RAM) included in at least one processor 120, or may be implemented as a memory separate from at least one processor 120. In this case, the memory 110 may be implemented as a memory embedded in the electronic apparatus 100 based on a data storage purpose, or may be implemented as a memory detachable from the electronic apparatus 100. For example, data for driving the electronic apparatus 100 may be stored in the memory embedded in the electronic apparatus 100, and data for an extended function of the electronic apparatus 100 may be stored in the memory detachable from the electronic apparatus 100.

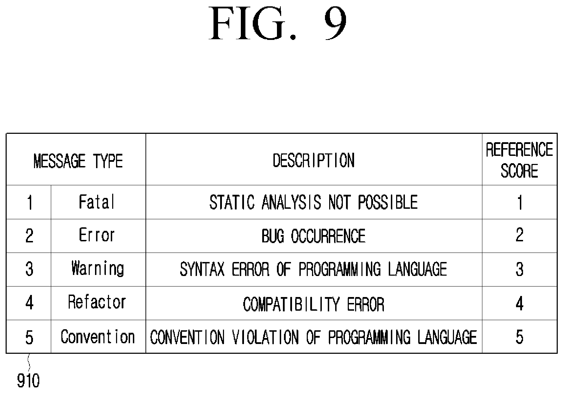

The memory 110 may store at least one instruction. The memory 110 may store a message type table 910 illustrated in FIG. 9. The memory 110 may store the code generation model 150.

At least one processor 120 may be connected to the memory 110 to control the electronic apparatus 100.

At least one processor 120 may perform an overall control operation of the electronic apparatus 100. Specifically, at least one processor 120 may perform a function of controlling the overall operation of the electronic apparatus 100.

At least one processor 120 may be implemented as a digital signal processor (DSP), a microprocessor, or a time controller (TCON) for processing a digital signal. However, at least one processor 120 is not limited thereto, and may include or be defined as at least one of a central processing unit (CPU), a micro controller unit (MCU), a micro processing unit (MPU), a controller, an application processor (AP), a graphics-processing unit (GPU), a communication processor (CP), or an advanced reduced instruction set computer (RISC) machines (ARM) processor. In addition, at least one processor 120 may be implemented as a system-on-chip (SoC) or a large scale integration (LSI) in which a processing algorithm is embedded, or may be implemented as a field programmable gate array (FPGA). In addition, at least one processor 120 may perform various functions by executing computer executable instructions stored in the memory.

At least one processor 120 may acquire a user command for training the code generation model 150, acquire source code corresponding to the code training command, acquire a first code block and a second code block by partitioning the source code into predetermined units, acquire first error message information including at least one detailed error message related to the first code block and second error message information including at least one detailed error message related to the second code block, acquire a first inspection score corresponding to the first error message information and a second inspection score corresponding to the second error message information, determine a sampling block from among the first code block and the second code block on the basis of the first inspection score and the second inspection score, and train the code generation model 150 by using the sampling block.

At least one processor 120 may acquire (or receive) the user command for training the code generation model 150. The user command may include a user input for training the code generation model 150.

When the code training command is acquired, at least one processor 120 may acquire the source code corresponding to the code training command.

For example, at least one processor 120 may acquire source code including various candidate training data according to the code training command.

For example, at least one processor 120 may acquire the source code corresponding to the code training command based on the code training command. The code training command may include information related to training. For example, the information related to training may include a training direction or a training category.

At least one processor 120 may acquire the source code by using a source code database 140. At least one processor 120 may request the source code from the source code database 140 based on the code training command. The source code database 140 may transmit the source code to the electronic apparatus 100 in response to the request. At least one processor 120 may receive the source code from the source code database 140.

The source code may include the code information to be used as training data. The source code may include raw data. At least one processor 120 may train the code generation model 150 by using a plurality of source codes.

To perform a training function, at least one processor 120 may use the plurality of source codes.

At least one processor 120 may partition (classify) the source code into the predetermined units. At least one processor 120 may perform a preprocessing function on the source code to use the standardized training data. The preprocessing function may include an operation of reducing a size of the source code. When the size of the source code is reduced, the source code may be used as efficient training data.

At least one processor 120 may partition the source code into a plurality of code blocks based on the predetermined units.

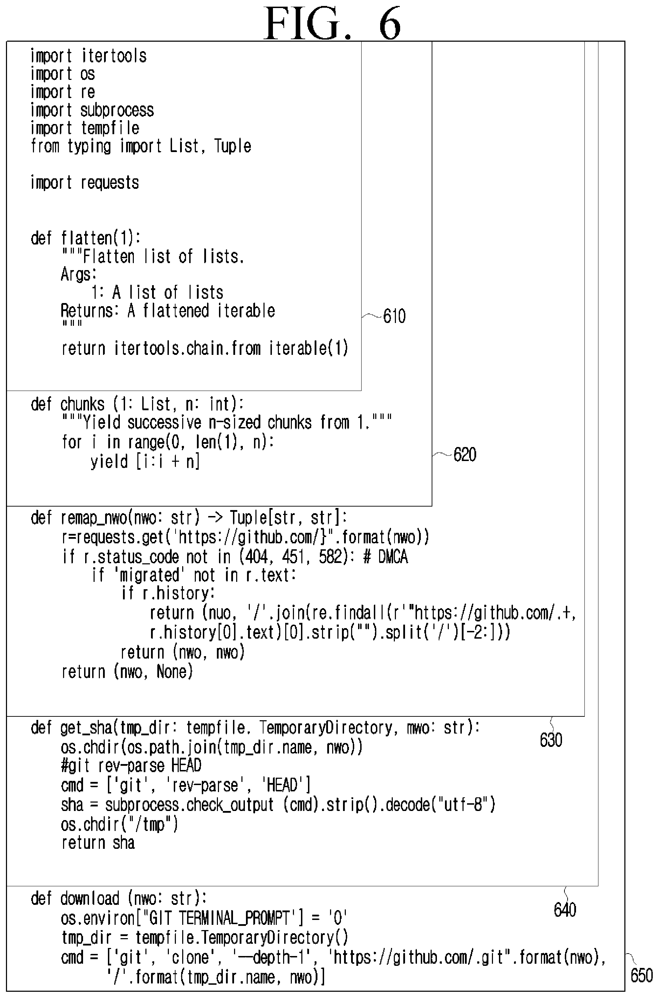

According to an embodiment, the predetermined unit may be a function unit declared in the source code. The source code may include a plurality of functions. At least one processor 120 may partition the source code on a function unit basis. A description thereof is provided with reference to FIG. 6. The function unit may be described as a first unit.

At least one processor 120 may partition the source code into a plurality of code blocks based on a line (or position) at which a function is declared in the source code.

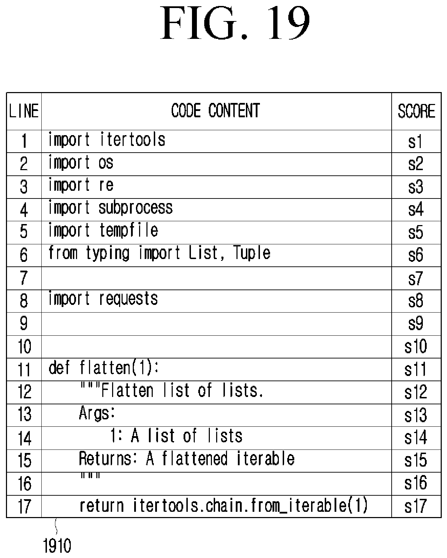

According to an embodiment, the predetermined unit may be a line unit of the source code. At least one processor 120 may partition the source code based on lines of the source code. A description thereof is provided with reference to FIG. 19. The line unit may be described as a second unit.

At least one processor 120 may partition the source code into a first code block and a second code block based on the predetermined unit. At least one processor 120 may acquire the first code block first according to a time sequence, and then acquire the second code block.

At least one processor 120 may cumulatively perform partition operations. At least one processor 120 may partition the source code and cumulatively acquire code blocks.

At least one processor 120 may acquire the first code block and the second code block by cumulatively applying the predetermined unit to the source code, the first code block having a smaller size than the second code block.

It is assumed that at least one processor 120 partitions source code including 48 lines. At least one processor 120 may partition code of lines 1 to 19 into the first code block. At least one processor 120 may partition code of lines 1 to 25 into the second code block. The second code block may include code included in the first code block. At least one processor 120 may partition the source code to include previously partitioned code.

At least one processor 120 may analyze the first code block to acquire at least one detailed error message. At least one processor 120 may analyze the second code block to acquire at least one detailed error message.

At least one processor 120 may compile (or inspect) a code block to acquire a detailed error message. The detailed error message may be described as detailed error information.

The detailed error message may be a message indicating a result of inspecting whether an error is included in a code block. At least one processor 120 may analyze whether an error is included in a code block. At least one processor 120 may perform an error inspection on only code included in a code block, rather than the entire source code. At least one processor 120 may generate an error message through an error inspection. At least one processor 120 may perform an error inspection for each of code blocks to acquire error messages. One acquired error message may be described as a detailed error message. At least one processor 120 may acquire a plurality of detailed error messages from one code block.

At least one processor 120 may acquire first error message information including at least one detailed error message acquired from the first code block. The first error message information may include at least one detailed error message corresponding to the first code block.

At least one processor 120 may acquire second error message information including at least one detailed error message acquired from the second code block. The second error message information may include at least one detailed error message corresponding to the second code block.

At least one processor 120 may acquire (or calculate) a first inspection score corresponding to the first error message information. At least one processor 120 may acquire (or calculate) a second inspection score corresponding to the second error message information.

At least one processor 120 may acquire an inspection score based on a predetermined method. The inspection score may be a score indicating a possibility that an error occurs in a code block. As the inspection score is higher, the error occurrence possibility may be determined to be lower.

The predetermined method may include at least one of a method (first method) of acquiring an inspection score by using a base score(or reference score) corresponding to a message type or a method (second method) of acquiring an inspection score by using ratio information.

At least one processor 120 may calculate the first inspection score based on at least one detailed error message included in the first error message information. At least one processor 120 may calculate the second inspection score based on at least one detailed error message included in the second error message information.

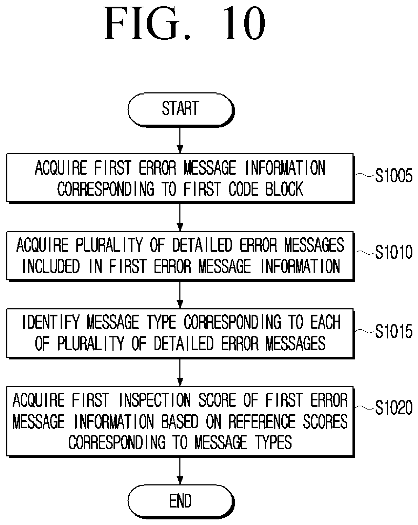

At least one processor 120 may identify a message type of each of at least one detailed error message included in the first error message information and the second error message information, and acquire the first inspection score and the second inspection score based on reference scores corresponding to the identified message types. A detailed description thereof is provided with reference to FIGS. 9 and 10.

At least one processor 120 may identify a message type corresponding to each of at least one detailed error message included in the first error message information. For example, it is assumed that the first error message information includes a first detailed error message and a second detailed error message. At least one processor 120 may identify a message type of the first detailed error message and a message type of the second detailed error message. At least one processor 120 may acquire a base score (first score) corresponding to the message type of the first detailed error message and acquire a base score (second score) corresponding to the message type of the second detailed error message by using the message type table 910 illustrated in FIG. 9. At least one processor 120 may acquire the first inspection score of the first error message information based on an average value of the first score and the second score. A method of acquiring the second inspection score may also be the same as the method of acquiring the first inspection score.

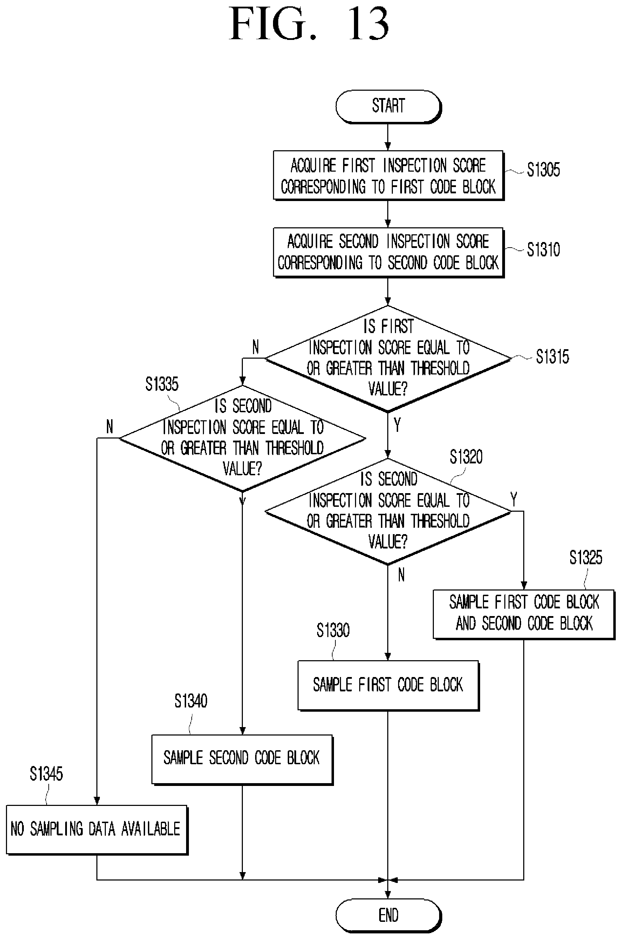

At least one processor 120 may identify a message type of each of at least one detailed error message included in the first error message information and the second error message information, and acquire the first inspection score and the second inspection score based on ratio information for each message type and weight information for each message type. A detailed description thereof is provided with reference to FIG. 13.

At least one processor 120 may determine, as the sampling block, a code block corresponding to an inspection score equal to or greater than a threshold value among the first inspection score and the second inspection score.

At least one processor 120 may determine (or acquire or identify) the sampling block based on the inspection score. The sampling block may indicate selective training data used in a training process of the code generation model 150. At least one processor 120 may selectively determine the sampling block among the plurality of partitioned code blocks. The sampling block may include at least one block among the plurality of partitioned code blocks.

The sampling block may be described as a filtering block, a training block, or a preprocessed block.

For example, at least one processor 120 may determine all code blocks among the plurality of partitioned code blocks as the sampling blocks.

For example, at least one processor 120 may determine only some code blocks among the plurality of partitioned code blocks as the sampling blocks.

For example, at least one processor 120 may not determine any block among the plurality of partitioned code blocks as the sampling block. At least one processor 120 may not use the entire source code in the training process of the code generation model 150.

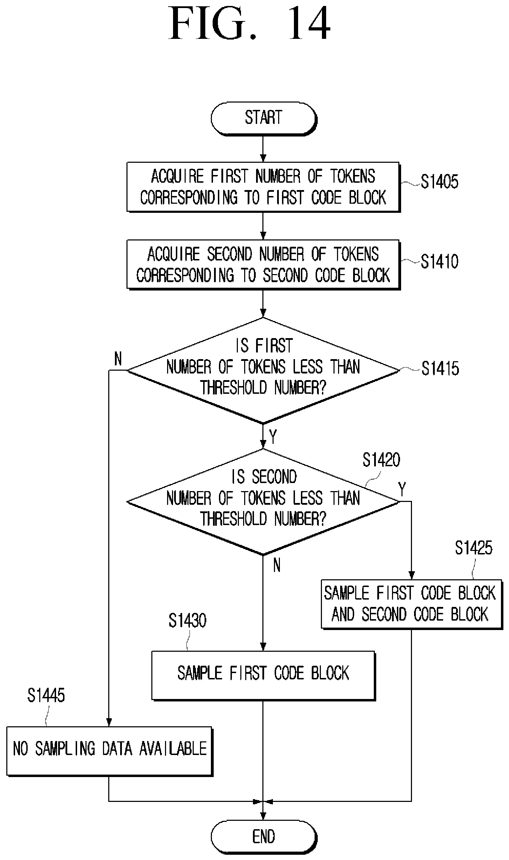

At least one processor 120 may acquire a first number of tokens corresponding to the first code block, acquire a second number of tokens corresponding to the second code block, determine the first code block and the second code block as the sampling blocks when the first number of tokens is less than a threshold number and the second number of tokens is less than the threshold number, and determine the first code block as the sampling block when the first number of tokens is less than the threshold number and the second number of tokens is not less than the threshold number. A detailed description thereof is provided with reference to FIG. 14.

At least one processor 120 may acquire preprocessed code information including the sampling block, and acquire result code information by inputting the preprocessed code information into the code generation model 150 as input data.

The preprocessed code information may include the sampling block. At least one processor 120 may acquire the preprocessed code information by performing a preprocessing function. At least one processor 120 may change a data format to use the determined sampling block in the training process of the code generation model 150. At least one processor 120 may acquire the preprocessed code information by converting (or processing) the sampling block based on a predetermined format.

According to various implementations, at least one processor 120 may use the sampling block itself in the training process of the code generation model 150 without changing the data format.

At least one processor 120 may input the preprocessed code information into the code generation model 150. At least one processor 120 may acquire result code information corresponding to the preprocessed code information from the code generation model 150.

The result code information may include supplemented code generated by the code generation model 150.

The supplemented code may include at least one of code for correcting an error occurring in the preprocessed code information, code for reducing the error occurrence possibility in the preprocessed code information, or code for increasing efficiency in the preprocessed code information.

The supplemented code may be described as corrected code, added code, generated code, changed code, enhanced code, reinforced code, or the like.

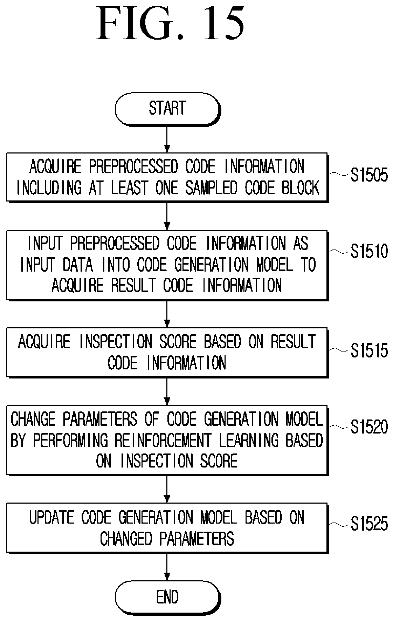

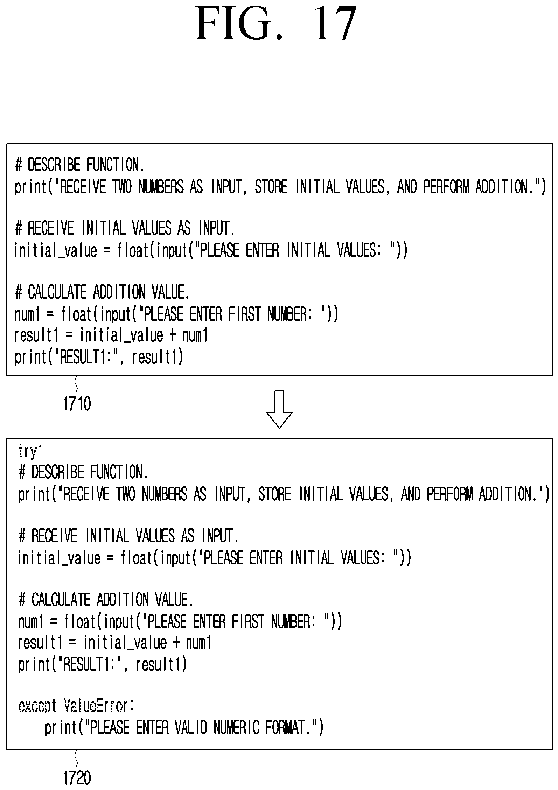

A description of the result code information including the supplemented code is provided with reference to FIGS. 15 and 17.

At least one processor 120 may partition the source code into a plurality of code blocks based on the predetermined unit (first unit).

At least one processor 120 may acquire a third code block and a fourth code block by cumulatively applying the second unit, rather than the first unit, to the result code information, acquire a third inspection score corresponding to the third code block and a fourth inspection score corresponding to the fourth code block, and acquire an average inspection score of the third inspection score and the fourth inspection score.

The first unit may be the function unit, and the second unit may be the line unit. A description thereof is provided with reference to FIG. 19.

At least one processor 120 may change parameters of the code generation model 150 by performing a reinforcement learning function based on the average inspection score, and update the code generation model 150 based on the changed parameters.

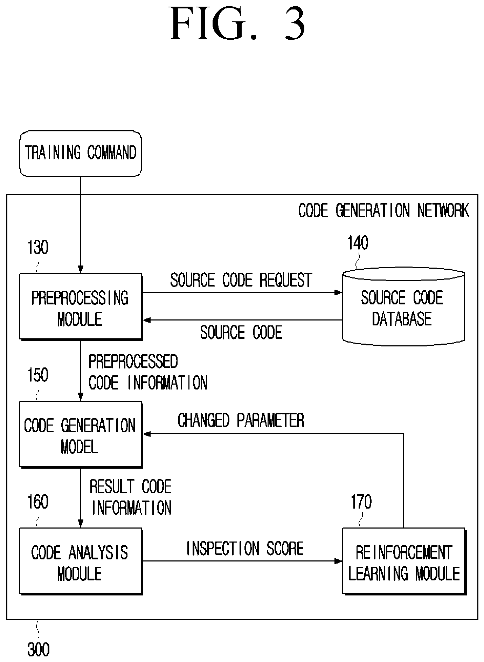

The reinforcement learning function may include an operation of repeatedly updating parameters related to the code generation model 150. A description thereof is provided with reference to FIGS. 3 and 15.

FIG. 3 is a diagram illustrating an operation of training the code generation model according to an embodiment.

Referring to FIG. 3, the electronic apparatus 100 may train the code generation model 150 through a code generation network 300. The code generation network 300 may include at least one of a preprocessing module 130, the source code database 140, the code generation model 150, the source code database 140, or a reinforcement learning module 170.

The electronic apparatus 100 may acquire a training command. The training command may be included in a user input.

The preprocessing module 130 may include a module that partitions the source code to convert the source code into standardized training data. The standardized training data may include data excluding unnecessary parts of the source code. The preprocessing module 130 may acquire the training command. The preprocessing module 130 may request the source code from the source code database 140 based on the training command.

The source code database 140 may include a plurality of source codes. The source code database 140 may include the plurality of source codes classified based on a specific category. The source code database 140 may provide source code corresponding to a request based on information included in a source code request. The source code may include at least one of complete code, incomplete code, or code including an error. The source code database 140 may receive a request for the source code from the preprocessing module 130. The source code request may include information indicating the training command. The source code database 140 may identify the source code corresponding to the source code request. The source code database 140 may transmit the identified source code to the preprocessing module 130.

The preprocessing module 130 may receive the source code from the source code database 140. The preprocessing module 130 may acquire the preprocessed code information based on the source code. The preprocessing module 130 may perform the preprocessing function to partition the source code into a plurality of code blocks. The preprocessing module 130 may acquire the preprocessed code information by using only sampled code blocks among the plurality of code blocks. The preprocessing module 130 may transmit the preprocessed code information to the code generation model 150.

The code generation model 150 may be a model that provides complete (or supplemented) code corresponding to input data. The input data may include at least one of incomplete code or information indicating the incomplete code. The code generation model 150 may receive the preprocessed code information from the preprocessing module 130. The code generation model 150 may generate the result code information by using the preprocessed code information. The code generation model 150 may acquire the result code information as the output data by using the preprocessed code information as the input data. The result code information may include code supplementing the preprocessed code information. The code generation model 150 may transmit the result code information to a code analysis module 160.

The code analysis module 160 may include a module that analyzes code to score the code. A scoring operation may include an operation of calculating a score indicating the error occurrence possibility. The code analysis module 160 may receive the result code information from the code generation model 150. The code analysis module 160 may acquire an inspection score of the result code information. The code analysis module 160 may transmit the inspection score of the result code information to the reinforcement learning module 170.

The reinforcement learning module 170 may include a module that changes parameters to repeatedly perform a training operation related to the code generation model 150. The reinforcement learning module 170 may receive the inspection score of the result code information from the code analysis module 160. The reinforcement learning module 170 may determine whether to change at least one parameter included in the code generation model 150 based on the inspection score. The reinforcement learning module 170 may change at least one parameter based on the inspection score, and transmit the changed parameter to the code generation model 150.

The code generation model 150 may receive the changed parameter from the reinforcement learning module 170. The code generation model 150 may be updated by using the changed parameter. The code generation model 150 may regenerate the result code information corresponding to the preprocessed code information based on the changed parameter. The electronic apparatus 100 may then repeat an update process by using the code analysis module 160 and the reinforcement learning module 170.

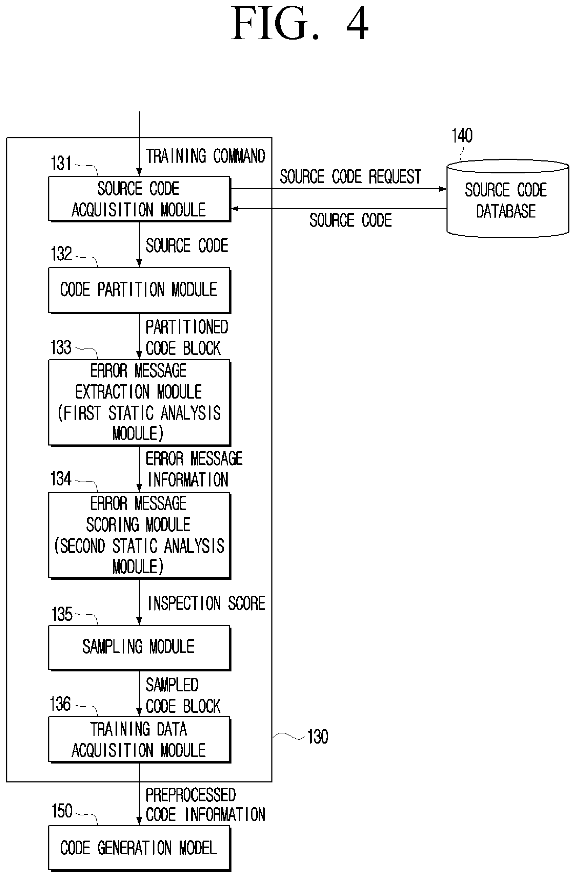

FIG. 4 is a diagram illustrating an operation of preprocessing the training data according to an embodiment.

Referring to FIG. 4, the preprocessing module 130 may include at least one of a source code acquisition module 131, a code partition module 132, an error message extraction module 133, an error message scoring module 134, a sampling module 135, or a training data acquisition module 136.

The source code acquisition module 131 may include a module that acquires source code from the source code database 140. The source code acquisition module 131 may transmit a source code request to the source code database 140 based on a received training command. The source code acquisition module 131 may receive the source code corresponding to the request from the source code database 140. The source code acquisition module 131 may transmit the received source code to the code partition module 132.

The code partition module 132 may include a module that partitions source code based on a predetermined criterion. The predetermined criterion may be one of the function unit or the line unit. The code partition module 132 may partition the source code into a plurality of code blocks based on the predetermined criterion. The code partition module 132 may cumulatively partition the code blocks. A description thereof is provided with reference to FIG. 6. The code partition module 132 may transmit the partitioned code blocks to the error message extraction module 133.

The error message extraction module 133 may include a module that generates error message information indicating errors that may occur in a code block. The error message extraction module 133 may receive the partitioned code blocks from the code partition module 132. The error message extraction module 133 may acquire the error message information corresponding to each of the partitioned code blocks. The error message information may include at least one detailed error message. The detailed error message may include a message indicating an error occurring in the partitioned code block. The error message extraction module 133 may transmit the error message information corresponding to each of the partitioned code blocks to the error message scoring module 134. The error message extraction module 133 may be described as a first static analysis module.

The error message scoring module 134 may include a module that calculates a score related to an error message. The error message scoring module 134 may receive the error message information from the error message extraction module 133. The error message scoring module 134 may acquire an inspection score corresponding to each of the partitioned code blocks. The inspection score may include a score indicating the error occurrence possibility. A higher inspection score may indicate a lower error occurrence possibility. The error message scoring module 134 may transmit the inspection score corresponding to each of the partitioned code blocks to the sampling module 135. The error message scoring module 134 may be described as a second static analysis module.

The sampling module 135 may include a module that selects some code blocks among a plurality of code blocks based on the inspection score. The sampling module 135 may sample some code blocks among the plurality of code blocks by using the inspection score. The sampling module 135 may transmit the sampled code blocks to the training data acquisition module 136. The sampling module 135 may be described as a filtering module.

The training data acquisition module 136 may be a module that acquires (or generates) the standardized training data. The training data acquisition module 136 may acquire the code information including only the sampled code blocks. The code information generated by the training data acquisition module 136 may be described as the preprocessed code information. The training data acquisition module 136 may transmit the preprocessed code information to the code generation model 150.

The preprocessed code information acquired by the training data acquisition module 136 may have a smaller size than the source code acquired by the source code acquisition module 131. The reason is that the preprocessed code information includes only the sampled code information. Through a sampling operation, a size of the training data may be reduced. Through the sampling operation, an error occurrence rate of the training data may be reduced.

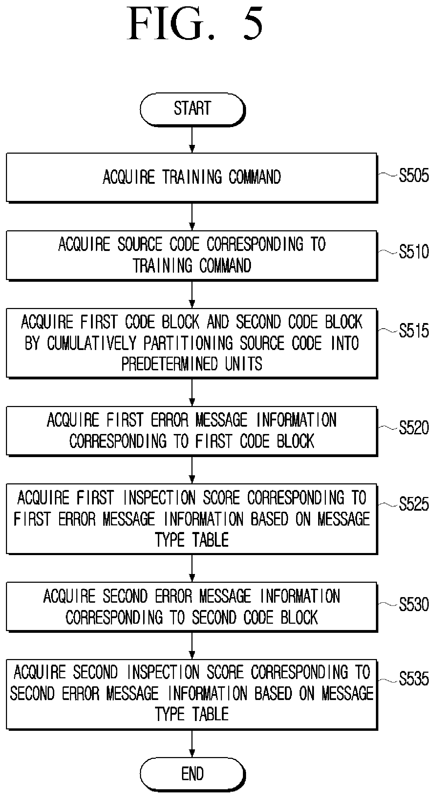

FIG. 5 is a diagram illustrating an operation of acquiring the inspection score according to an embodiment.

Referring to FIG. 5, the electronic apparatus 100 may acquire the training command (S505). The electronic apparatus 100 may acquire the source code corresponding to the training command (S510). The electronic apparatus 100 may acquire the first code block and the second code block by cumulatively partitioning the source code into the predetermined units. The second code block may include the first code block. The predetermined unit may include the criterion for classifying code. The predetermined unit may include at least one of the function unit or the line unit.

The electronic apparatus 100 may acquire the first error message information corresponding to the first code block (S520). The electronic apparatus 100 may acquire the first inspection score corresponding to the first error message information based on the message type table (S525). The message type table is described with reference to FIG. 9.

The electronic apparatus 100 may acquire the second error message information corresponding to the second code block (S530). The electronic apparatus 100 may acquire the second inspection score corresponding to the second error message information based on the message type table (S535).

FIG. 6 is a diagram illustrating an operation of acquiring the code block according to an embodiment.

Referring to FIG. 6, the electronic apparatus 100 may acquire the source code. It is assumed that the source code is code including 48 lines and the predetermined unit corresponds to the function unit. The electronic apparatus 100 may cumulatively partition the source code on a function unit basis.

The electronic apparatus 100 may acquire a plurality of code blocks on the function unit basis. The plurality of code blocks may include cumulative code blocks.

The electronic apparatus 100 may acquire a first code block 610 including only a first function (flatten). The first code block 610 may include code of lines 1 to 19.

The electronic apparatus 100 may acquire a second code block 620 including the first function (flatten) and a second function (chunks). The second code block 620 may include code of lines 1 to 25.

The electronic apparatus 100 may acquire a third code block 630 including the first function (flatten), the second function (chunks), and a third function (remap_nwo). The third code block 630 may include code of lines 1 to 35.

The electronic apparatus 100 may acquire a fourth code block 640 including the first function (flatten), the second function (chunks), the third function (remap_nwo), and a fourth function (get_sha). The fourth code block 640 may include code of lines 1 to 44.

The electronic apparatus 100 may acquire a fifth code block 650 including the first function (flatten), the second function (chunks), the third function (remap _nwo), the fourth function (get_sha), and a fifth function (download). The fifth code block 650 may include code of lines 1 to 48.

The fifth code block 650 and the source code may be identical to each other. One of the code blocks acquired by the electronic apparatus 100 may be identical to the source code. The reason is that the code blocks are cumulatively acquired.

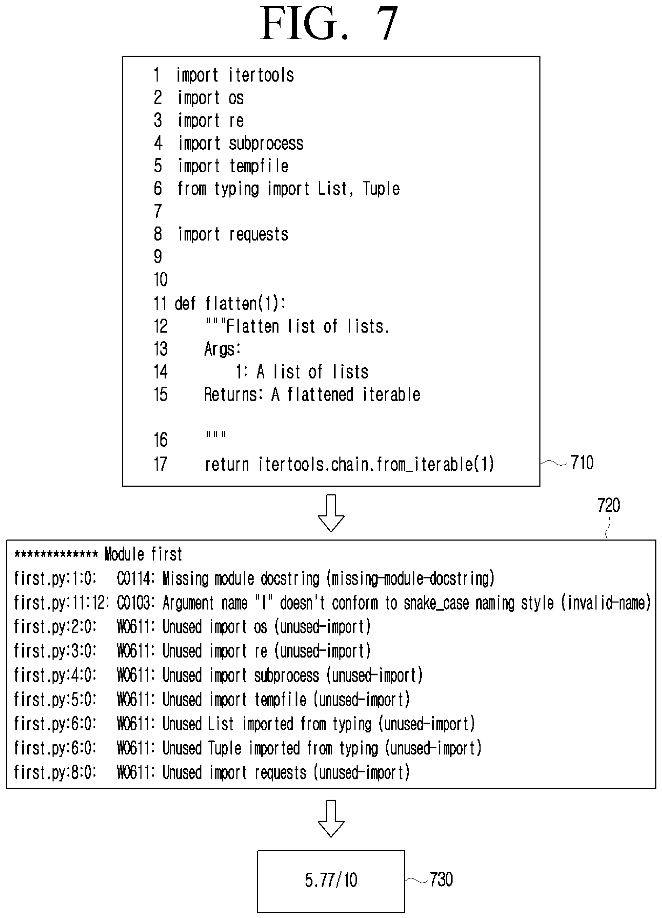

FIG. 7 is a diagram illustrating an operation of calculating an inspection score for each code block according to an embodiment.

A first code block 710 illustrated in FIG. 7 may correspond to the first code block 610 illustrated in FIG. 6. The electronic apparatus 100 may acquire first error message information 720 corresponding to the first code block 710. The electronic apparatus 100 may acquire the first error message information 720 corresponding to the first code block 710 by using the error message extraction module 133.

The electronic apparatus 100 may acquire a first inspection score 730 based on the first error message information 720. The electronic apparatus 100 may acquire the first inspection score 730 corresponding to the first error message information 720 by using the error message scoring module 134.

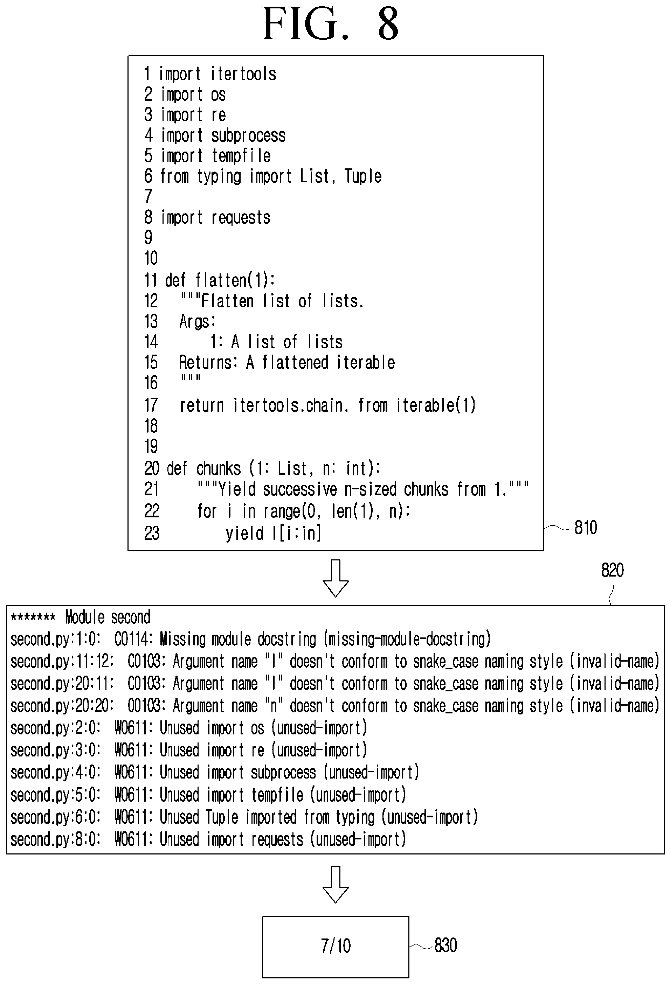

FIG. 8 is a diagram illustrating an operation of calculating an inspection score for each code block according to an embodiment.

FIG. 8 is a diagram illustrating an operation of calculating an inspection score for each code block according to an embodiment.

A second code block 810 illustrated in FIG. 8 may correspond to the second code block 620 illustrated in FIG. 6. The electronic apparatus 100 may acquire second error message information 820 corresponding to the second code block 810. The electronic apparatus 100 may acquire the second error message information 820 corresponding to the second code block 810 by using the error message extraction module 133.

The electronic apparatus 100 may acquire a second inspection score 830 based on the second error message information 820. The electronic apparatus 100 may acquire the second inspection score 830 corresponding to the second error message information 820 by using the error message scoring module 134.

The second inspection score 830 may have a higher score than the first inspection score 730 in FIG. 7. An inspection score may indicate that a higher value represents a lower error occurrence possibility. The second code block 810 may include the first code block 710. Accordingly, an error occurring in the first code block 710 may not occur in the second code block 810.

FIG. 9 is a diagram illustrating a table indicating scores corresponding to message types according to an embodiment.

A message type table 910 illustrated in FIG. 9 may include reference scores corresponding to message types. The message types may include types of error messages. The message types may be classified based on a user setting. The message types may include at least one of a first type (fatal), a second type (error), a third type (warning), a fourth type (refactor), or a fifth type (convention).

The first type (fatal) may include a type for which static analysis is not possible. A score corresponding to the first type may be 1.

The second type (error) may include a type in which a bug occurs. A score corresponding to the second type may be 2.

The third type (warning) may include a type in which a syntax error of a programming language occurs. A score corresponding to the third type may be 3.

The fourth type (refactor) may include a type in which a compatibility error occurs. A score corresponding to the fourth type may be 4.

The fifth type (convention) may include a type in which a convention violation of a programming language occurs. A score corresponding to the fifth type may be 5.

FIG. 9 illustrates that the message types are classified into five types, and are not necessarily limited thereto.

FIG. 10 is a diagram illustrating an operation of calculating an inspection score based on scores corresponding to message types according to an embodiment.

Referring to FIG. 10, the electronic apparatus 100 may acquire the first error message information corresponding to the first code block (S1005). The electronic apparatus 100 may acquire a plurality of detailed error messages included in the first error message information (S1010).

The electronic apparatus 100 may identify a message type corresponding to each of the plurality of detailed error messages (S1015). The electronic apparatus 100 may acquire the first inspection score of the first error message information based on the reference scores corresponding to the message types (S1020).

The electronic apparatus 100 may acquire the message type corresponding to each of the plurality of detailed error messages. The electronic apparatus 100 may acquire the scores corresponding to each of the plurality of detailed error messages by using the message type table 910 illustrated in FIG. 9.

The operation illustrated in FIG. 10 may be applied in the same manner to acquiring the second inspection score corresponding to the second code block.

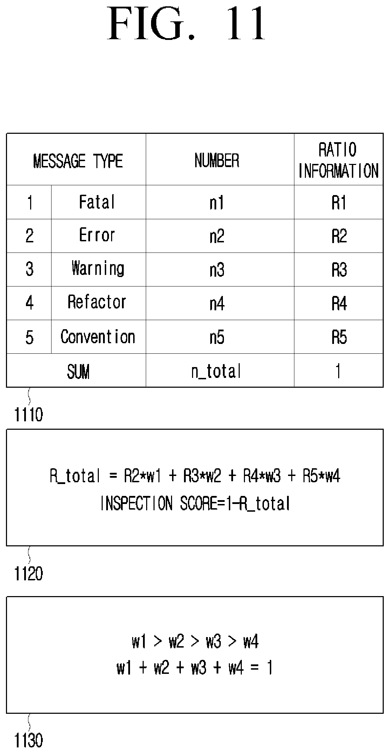

FIG. 11 is a diagram illustrating an operation of acquiring an inspection score based on ratio information according to an embodiment.

A table 1110 illustrated in FIG. 11 may include information on the number of error message types and ratio information for each type of the error message included in a specific code block.

It is assumed that the specific code block includes n1 detailed error messages of the first type, n2 detailed error messages of the second type, n3 detailed error messages of the third type, n4 detailed error messages of the fourth type, and n5 detailed error messages of the fifth type.

The electronic apparatus 100 may acquire ratio information indicating a ratio of the number of detailed error messages for each type with respect to a total number n_total of detailed error messages. The n_total may be n1+n2+n3+n4+n5.

First ratio information R1 of the first type may be n1/n_total.

Second ratio information R2 of the second type may be n2/n_total.

Third ratio information R3 of the third type may be n3/n_total.

Fourth ratio information R4 of the fourth type may be n4/n_total.

Fifth ratio information R5 of the fifth type may be n5/n_total.

The sum of the first ratio information R1, the second ratio information R2, the third ratio information R3, the fourth ratio information R4, and the fifth ratio information R5 may be 1.

Embodiment 1120 may include an equation for acquiring an inspection score by using the ratio information. The inspection score may be acquired by subtracting total ratio information R_total from 1.

The total ratio information R_total may be a value acquired by summing a first value R2*w1 acquired by multiplying the second ratio information R2 by a first weight w1, a second value R3*w2 acquired by multiplying the third ratio information R3 by a second weight w2, a third value R4*w3 acquired by multiplying the fourth ratio information R4 by a third weight w3, and a fourth value R5*w4 acquired by multiplying the fifth ratio information R5 by a fourth weight w4.

The first weight w1 may be a weight corresponding to the second type.

The second weight w2 may be a weight corresponding to the third type.

The third weight w3 may be a weight corresponding to the fourth type.

The fourth weight w4 may be a weight corresponding to the fifth type.

Embodiment 1130 may indicate conditions related to Embodiment 1120. The first weight w1 may be greater than the second weight w2, the second weight w2 may be greater than the third weight w3, and the third weight w3 may be greater than the fourth weight w4.

The sum of the first weight w1, the second weight w2, the third weight w3, and the fourth weight w4 may be 1.

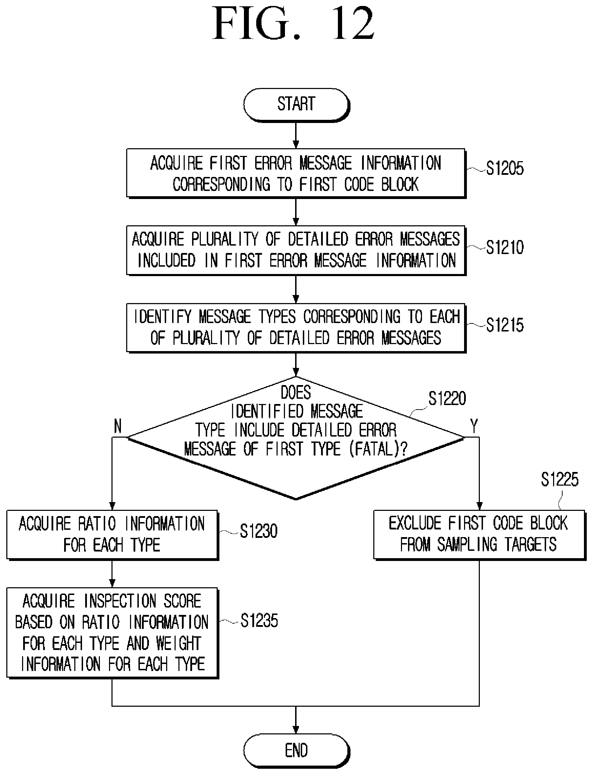

A weight corresponding to the first type may not be considered. The electronic apparatus 100 may calculate the inspection score as zero because the first type includes a fatal error. A description thereof is provided with reference to FIG. 12.

FIG. 12 is a diagram illustrating an operation of acquiring an inspection score based on ratio information according to an embodiment.

Referring to FIG. 12, the electronic apparatus 100 may acquire the first error message information corresponding to the first code block (S1205). The electronic apparatus 100 may acquire a plurality of detailed error messages included in the first error message information (S1210). The electronic apparatus 100 may identify the message types corresponding to each of the plurality of detailed error messages (S1215).

The electronic apparatus 100 may determine whether at least one of the identified message types includes a detailed error message of the first type (fatal) (S1220).

When at least one of the identified message types includes the detailed error message of the first type (fatal) (S1220-Y), the electronic apparatus 100 may exclude the first code block from sampling targets (S1225). The electronic apparatus 100 may determine that the detailed error message of the first type is a fatal error message and that the code is not standardized. The electronic apparatus 100 may not use the first code block as the training data.

When at least one identified message type does not include the detailed error message of the first type (fatal) (S1220-N), the electronic apparatus 100 may acquire ratio information for each type (S1230). The ratio information for each type may include the first ratio information R1, the second ratio information R2, the third ratio information R3, the fourth ratio information R4, and the fifth ratio information R5 illustrated in FIG. 11.

The electronic apparatus 100 may acquire the inspection score based on the ratio information for each type and the weight information for each type (S1235). The weight information for each type may include the first weight w1, the second weight w2, the third weight w3, and the fourth weight w4.

FIG. 13 is a diagram illustrating the sampling operation based on an inspection score according to an embodiment.

Referring to FIG. 13, the electronic apparatus 100 may acquire the first inspection score corresponding to the first code block (S1305). The electronic apparatus 100 may acquire the second inspection score corresponding to the second code block (S1310).

The electronic apparatus 100 may determine whether the first inspection score is equal to or greater than the threshold value (S1315). When the first inspection score is equal to or greater than the threshold value (S1315-Y), the electronic apparatus 100 may determine whether the second inspection score is equal to or greater than the threshold value (S1320).

When the second inspection score is equal to or greater than the threshold value (S1320-Y), the electronic apparatus 100 may sample both the first code block and the second code block (S1325). The electronic apparatus 100 may use both the first code block and the second code block as the training data.

When the second inspection score is not equal to or greater than the threshold value (S1320-N), the electronic apparatus 100 may sample the first code block (S1330). The electronic apparatus 100 may use the first code block as the training data.

When the first inspection score is not equal to or greater than the threshold value (S1315-N), the electronic apparatus 100 may determine whether the second inspection score is equal to or greater than the threshold value (S1335).

When the second inspection score is equal to or greater than the threshold value (S1335-Y), the electronic apparatus 100 may sample the second code block (S1340). The electronic apparatus 100 may use the second code block as the training data.

When the second inspection score is not equal to or greater than the threshold value (S1335-N), the electronic apparatus 100 may determine that no sampling data is available.

The electronic apparatus 100 may acquire an inspection score corresponding to each of a plurality of code blocks, and may sample only code blocks corresponding to inspection scores equal to or greater than the threshold value. The electronic apparatus 100 may determine that code blocks corresponding to inspection scores less than the threshold value are not the standardized code.

According to various embodiments, a first threshold value compared with the first inspection score and a second threshold value compared with the second inspection score may be different from each other.

FIG. 14 is a diagram illustrating the sampling operation based on the number of tokens according to an embodiment.

Referring to FIG. 14, the electronic apparatus 100 may acquire the first number of tokens corresponding to the first code block (S1405). The electronic apparatus 100 may acquire the second number of tokens corresponding to the second code block (S1410).

A token may include a predetermined unit included in code. A token may include a minimum unit element in a programming language or a script. A token may include a minimum unit of interpretation. A token may include at least one of an identifier, a keyword, an operator, punctuation, a comment, a whitespace, or a character. The electronic apparatus 100 may calculate (or acquire) the number of tokens corresponding to each code block.

The electronic apparatus 100 may determine whether the first number of tokens is less than the threshold number (S1415). When the first number of tokens is less than the threshold number (S1415-Y), the electronic apparatus 100 may determine whether the second number of tokens is less than the threshold number (S1420).

When the second number of tokens is less than the threshold number (S1420-Y), the electronic apparatus 100 may sample both the first code block and the second code block (S1425). The electronic apparatus 100 may use both the first code block and the second code block as the training data.

When the second number of tokens is not less than the threshold number (S1420-N), the electronic apparatus 100 may sample the first code block (S1430). The electronic apparatus 100 may use the first code block as the training data.

When the first number of tokens is not less than the threshold number (S1415-N), the electronic apparatus 100 may determine that no sampling data is available (S1445). The first code block may have a smaller size than the second code block. When the first number of tokens corresponding to the first code block is already equal to or greater than the threshold number, the electronic apparatus 100 may determine that the second number of tokens corresponding to the second code block is also necessarily equal to or greater than the threshold number. The electronic apparatus 100 may exclude both the first code block and the second code block from the sampling targets.

The electronic apparatus 100 may acquire the number of tokens corresponding to each of a plurality of code blocks, and may sample only code blocks corresponding to the number of tokens less than the threshold number. The electronic apparatus 100 may determine that the code blocks corresponding to the number of tokens less than the threshold number are not the standardized code.

According to various embodiments, an order of steps S1410 and S1415 may be changed. Step S1415 may be performed first, and step S1410 may then be performed.

FIG. 15 is a diagram illustrating an operation of training the code generation model according to an embodiment.

Referring to FIG. 15, the electronic apparatus 100 may acquire the preprocessed code information including at least one sampled code block (S1505).

The electronic apparatus 100 may input the preprocessed code information as the input data into the code generation model 150 to acquire the result code information (S1510).

The electronic apparatus 100 may acquire the inspection score based on the result code information (S1515).

The electronic apparatus 100 may change parameters of the code generation model 150 by performing reinforcement learning based on the inspection score (S1520).

The electronic apparatus 100 may update the code generation model 150 based on the changed parameters. The electronic apparatus 100 may repeat the update operation until a predetermined event is identified.

The predetermined event may include at least one of an event in which the inspection score is equal to or greater than the threshold value, an event in which the number of update repetitions is equal to or greater than a threshold number, or an event in which the preprocessed code information is no longer acquired.

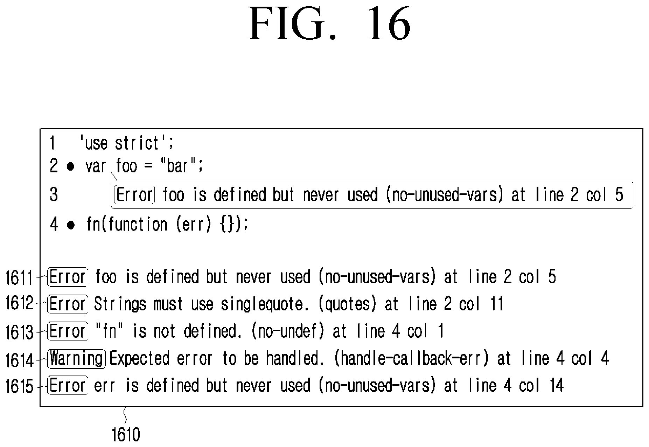

FIG. 16 is a diagram illustrating the error message according to an embodiment.

Embodiment 1610 illustrated in FIG. 16 may include detailed error messages. It is assumed that five detailed error messages are identified in Embodiment 1610.

A first detailed error message 1611 may be a message indicating that a specific variable (foo) is defined and not used. The first detailed error message 1611 may correspond to the second type.

A second detailed error message 1612 may be a message indicating that a specific string (use strict) uses one single quotation mark. A single quotation mark may not be used in a specific programming language. The second detailed error message 1612 may correspond to the second type.

A third detailed error message 1613 may be a message indicating that a specific function (fn) is not defined. The third detailed error message 1613 may correspond to the second type.

A fourth detailed error message 1614 may be a message indicating that an error occurring in an asynchronous callback function is not processed. The fourth detailed error message 1614 may correspond to the third type.

A fifth detailed error message 1615 may be a message indicating that a specific variable (err) is defined and not used. The fifth detailed error message 1615 may correspond to the first type.

FIG. 17 is a diagram illustrating the result code information according to an embodiment.

Referring to FIG. 17, the electronic apparatus 100 may input input data 1710 into the code generation model 150 to acquire output data 1720. The input data 1710 may be code corresponding to the user input.

For example, the input data 1710 may be code directly input by the user.

For example, the input data 1710 may be source code acquired based on the user input. The electronic apparatus 100 may acquire the source code corresponding to the user input from the source code database 140 including a plurality of source codes. The user input may include text (or audio) information such as "generate code that receives two numbers as input, stores initial values, and performs addition."

The electronic apparatus 100 may generate the output data 1720 including supplemented code by using the code generation model 150.

The supplemented code may include "try," "except ValueError:," and "print("Please enter a valid numeric format.")". When the supplemented code is added, an error message may be displayed when the user does not input numbers. In a calculation operation that uses only numbers, the user may incorrectly input characters. The electronic apparatus 100 may generate the output data 1720 by adding the supplemented code that guides the user to input numbers rather than characters.

The electronic apparatus 100 may acquire the output data 1720 having a higher degree of completeness than the input data 1710 without manual manipulation by the user. The code generation model 150 may be a model trained based on the standardized training data.

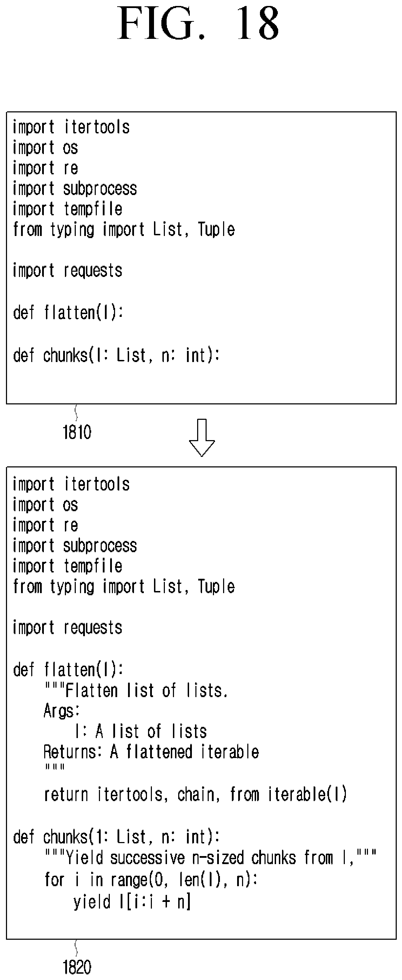

FIG. 18 is a diagram illustrating an operation of acquiring the result code information based on a prompt according to an embodiment.

Referring to FIG. 18, the electronic apparatus 100 may input input data 1810 into the code generation model 150 to acquire output data 1820.

The input data 1810 may include prompt code information. The prompt code information may include a predetermined code format. The prompt code information may include a code format or a code style rather than complete code. The prompt code information may include code defining only a function name.

The electronic apparatus 100 may generate detailed information corresponding to the prompt code information by using the code generation model 150. The electronic apparatus 100 may acquire output data 1820 including the complete code by using the code format included in the prompt code information.

For example, the input data 1810 may include only contents of a first function (flattern(I)) and a second function (chunks(I : List.n : int)). The electronic apparatus 100 may use the code generation model 150 to generate the output data 1820 including detailed code for the first function (flattern(I)) and detailed code for the second function (chunks(I : List.n : int)).

FIG. 19 is a diagram illustrating an operation of setting code blocks for each line according to an embodiment.

Referring to FIG. 19, the electronic apparatus 100 may partition a plurality of code blocks for each line. It is assumed that source code including 17 lines is provided. The electronic apparatus 100 may generate 17 code blocks by partitioning code for each line. The code blocks may be cumulative.

The first code block may include code corresponding to line 1. A score corresponding to the first code block may be s1.

The second code block may include code corresponding to lines 1 and 2. A score corresponding to the second code block may be s2.

A seventeenth code block may include code corresponding to lines 1 to 17. A score corresponding to the seventeenth code block may be s17.

According to various embodiments, when calculating an inspection score, the electronic apparatus 100 may exclude "zero" from calculation. The electronic apparatus 100 may acquire the inspection score as an average value of values excluding "zero" among a plurality of acquired inspection scores.

The electronic apparatus 100 may acquire the inspection scores corresponding to each of the plurality of code blocks partitioned for each line.

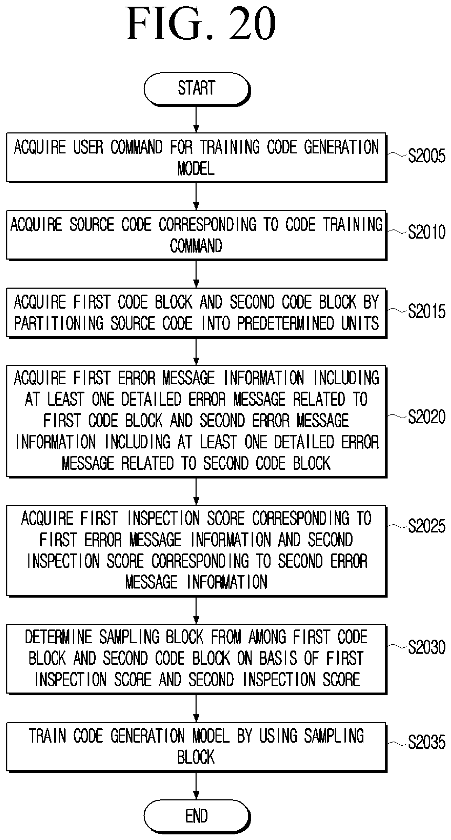

FIG. 20 is a diagram illustrating a control method of an electronic apparatus according to an embodiment.

## Claims

1. An electronic apparatus including a code generation model, the apparatus comprising:
a memory that stores at least one instruction; and
at least one processor connected to the memory and configured to control the electronic apparatus,
wherein the at least one processor is configured to:
acquire a user command for training the code generation model;
acquire source code corresponding to the code training command;
acquire a first code block and a second code block by partitioning the source code into predetermined units;
acquire first error message information including at least one detailed error message related to the first code block and second error message information including at least one detailed error message related to the second code block;
acquire a first inspection score corresponding to the first error message information and a second inspection score corresponding to the second error message information;
determine a sampling block from among the first code block and the second code block on the basis of the first inspection score and the second inspection score; and
train the code generation model by using the sampling block.

2. The apparatus as claimed in claim 1, wherein the at least one processor is configured to:
acquire the first code block and the second code block by cumulatively applying the predetermined unit to the source code,
the first code block having a smaller size than the second code block.

3. The apparatus as claimed in claim 2, wherein the predetermined unit is a function unit declared in the source code.

4. The apparatus as claimed in claim 1, wherein the at least one processor is configured to:
identify a message type of each of at least one detailed error message included in the first error message information and the second error message information; and
acquire the first inspection score and the second inspection score based on reference scores corresponding to the identified message types.

5. The apparatus as claimed in claim 1, wherein the at least one processor is configured to:
identify a message type of each of at least one detailed error message included in the first error message information and the second error message information; and
acquire the first inspection score and the second inspection score based on ratio information for each message type and weight information for each message type.

6. The apparatus as claimed in claim 1, wherein the at least one processor is configured to:
determine, as the sampling block, a code block corresponding to an inspection score equal to or greater than a threshold value among the first inspection score and the second inspection score.

7. The apparatus as claimed in claim 1, wherein the at least one processor is configured to:
acquire a first number of tokens corresponding to the first code block;
acquire a second number of tokens corresponding to the second code block;
determine the first code block and the second code block as the sampling block when the first number of tokens is less than a threshold number and the second number of tokens is less than the threshold number; and
determine the first code block as the sampling block when the first number of tokens is less than the threshold number and the second number of tokens is not less than the threshold number.

8. The apparatus as claimed in claim 1, wherein the at least one processor is configured to:
acquire preprocessed code information including the sampling block; and
acquire result code information by inputting the preprocessed code information into the code generation model as input data.

9. The apparatus as claimed in claim 8, wherein the predetermined unit is a first unit, and
the at least one processor is configured to:
acquire a third code block and a fourth code block by cumulatively applying a second unit to the result code information;
acquire a third inspection score corresponding to the third code block and a fourth inspection score corresponding to the fourth code block; and
acquire an average inspection score of the third inspection score and the fourth inspection score.

10. The apparatus as claimed in claim 9, wherein the at least one processor is configured to:
change parameters of the code generation model by performing a reinforcement learning function based on the average inspection score; and
update the code generation model based on the changed parameters.

11. A control method of an electronic apparatus including a code generation model, the method comprising:
acquiring a user command for training the code generation model;
acquiring source code corresponding to the code training command;
acquiring a first code block and a second code block by partitioning the source code into predetermined units;
acquiring first error message information including at least one detailed error message related to the first code block and second error message information including at least one detailed error message related to the second code block;
acquiring a first inspection score corresponding to the first error message information and a second inspection score corresponding to the second error message information;
determining a sampling block from among the first code block and the second code block on the basis of the first inspection score and the second inspection score; and
training the code generation model by using the sampling block.

12. The method as claimed in claim 11, wherein the acquiring of the first code block and the second code block includes:
acquiring the first code block and the second code block by cumulatively applying the predetermined unit to the source code,
the first code block having a smaller size than the second code block.

13. The method as claimed in claim 12, wherein the predetermined unit is a function unit declared in the source code.

14. The method as claimed in claim 11, wherein the acquiring of the first inspection score and the second inspection score includes:
identifying a message type of each of at least one detailed error message included in the first error message information and the second error message information; and
acquiring the first inspection score and the second inspection score based on reference scores corresponding to the identified message types.

15. The method as claimed in claim 11, wherein the acquiring of the first inspection score and the second inspection score includes:
identifying a message type of each of at least one detailed error message included in the first error message information and the second error message information; and
acquiring the first inspection score and the second inspection score based on ratio information for each message type and weight information for each message type.
